# EUROPEAN PATENT SPECIFICATION

(11) **EP 3 924 763 B1**
(45) Date of publication and mention of the grant of the patent: **25.12.2024**
(21) Application number: 20756373.5
(22) Date of filing: 14.02.2020
(51) Int. Cl.: G02B 6/46, B32B 37/14, B65H 49/00, B65H 49/20

(54) **OPTICAL FIBER AND ADHESIVE DISPENSER SYSTEM**
OPTISCHE FASER UND KLEBSTOFFSPENDERSYSTEM
FIBRE OPTIQUE ET SYSTÈME DE DISTRIBUTION OPTIQUE

(30) Priority: 14.02.2019 US 201962805565 P
(43) Date of publication of application: 22.12.2021
(73) Proprietor: OFS FITEL LLC, Norcross, GA 30071 (US)
(72) Inventor: GEORGE, John E., Cumming, GA 30041 (US); LEICHTER, Eric J., Buford, GA 30519 (US); RICHARDSON, Daryl K., Flowery Branch, GA 30542 (US)
(74) Representative: Stöckeler, Ferdinand
(86) International application number: PCT/US2020/018419
(87) International publication number: WO 2020/168281

(56) References cited:
- US-A- 5 193 756
- US-A1- 2013 292 035
- US-A1- 2013 333 822
- US-A1- 2015 055 920
- US-A1- 2015 241 638
- US-A1- 2016 154 189
- US-A1- 2018 348 465
- US-B2- 8 818 157
- US-B2- 9 395 500
- No further relevant documents disclosed

## Description

### CROSS REFERENCE TO RELATED APPLICATION

This application claims priority under 35 U.S.C. § 119(e) of United States Provisional Patent Application No. 62/805,565 filed February 14, 2019.

### BACKGROUND OF THE INVENTION

### Field of the Invention

The present invention relates to installations of optical fibers and cables inside private or commercial living units, and particularly to installations in which the fibers or cables are bonded to a supporting surface by an adhesive.

### Discussion of the Known Art

Document US 2018/348465 A1 discloses tools for installing optical fibers or cables at user premises, particularly when the installations involve bonding the fibers to a structural surface along a determined routing path at the premises.

Document US 2013/333822 A1 relates to the installation of an optical fiber or cable over a desired span at a customer premises.

Document US 5193756 A relates generally to optical fiber dispensers for use with wire-guided missiles, and more particularly, to a figure eight optical fiber dispenser having linear payout capability and that is operable at relatively high speeds.

Document US 2015055920 A1 relates to an optical-fiber cable that includes a perforated water-blocking element.

Installations of optical cables inside a multi-dwelling unit or a single-family home require the cable to be hidden, or that the finished installation have little if any adverse visual impact on occupants in the unit or home. Hiding the cable, for example, above a ceiling, behind a wall, or inside a crown molding or baseboard, however, is not always an option. As used herein, the term cable is intended to mean one or more optical fibers whether or not buffered or jacketed.

A cable installation procedure developed by OFS Fitel, LLC and known by the mark InvisiLight^{®}, allows an optical fiber cable to be installed along a wall of a building hallway without a need for a separate duct system to enclose and route the cable, or for metal clips to secure the cable to an underlying structure. Instead, an adhesive is used to bond the cable permanently to a wall, molding, or other supporting surface along the desired routing path. Because the adhesive dries white or clear, and the cable diameter is typically quite small, the finished installation is not likely to be noticed by persons nearby.

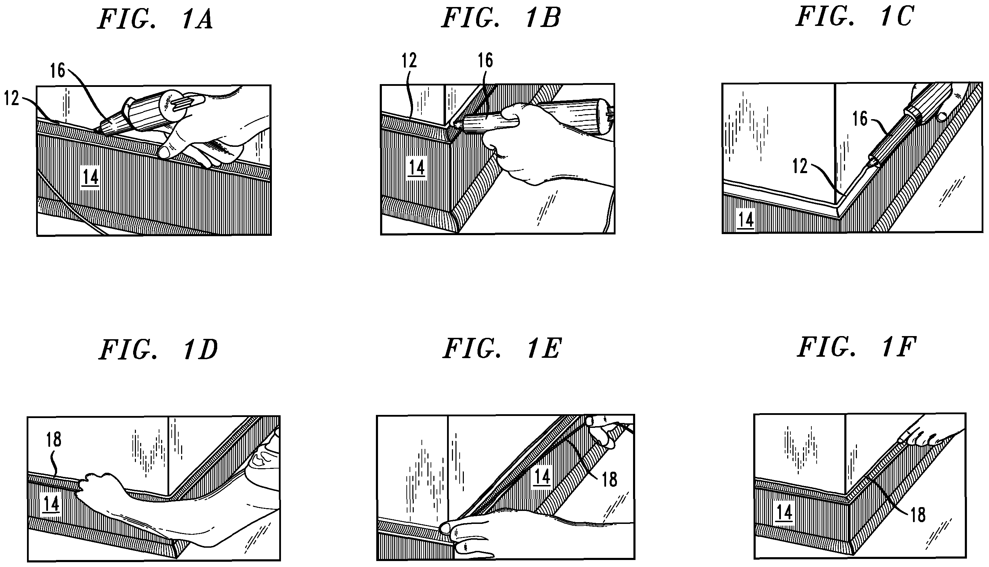

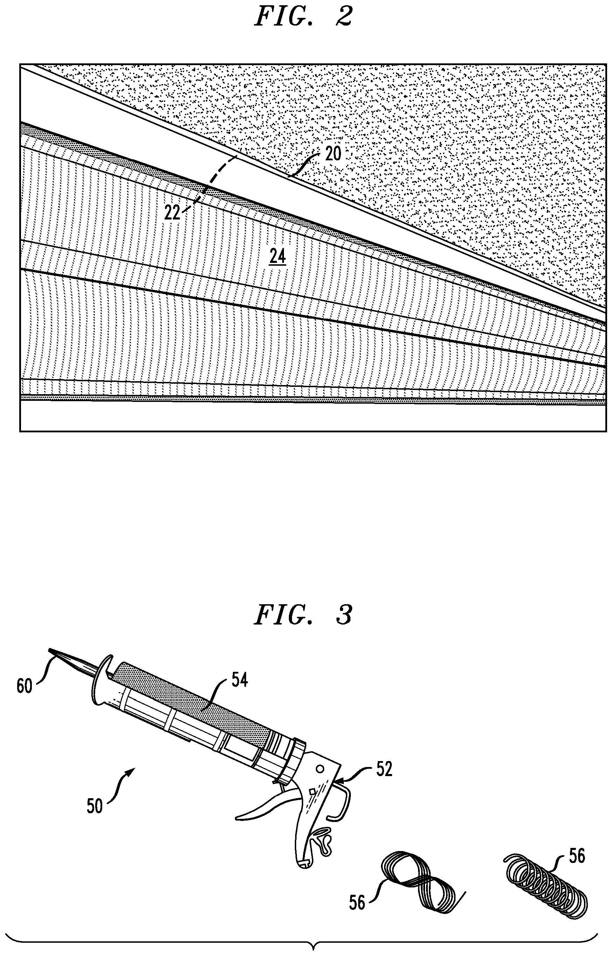

FIGS. 1A to 1F, and FIG. 2 illustrate the InvisiLight installation procedure. In FIGS. 1A to 1C, an installer deposits an adhesive bead 12 along a top edge of a baseboard molding 14 using an adhesive dispenser tool 16. FIGS. 1D to 1E show the installer setting an optical fiber cable 18, which is typically delivered to the installation site on a reel separately from the adhesive, into the deposited adhesive bead 12. In FIG. 2, an optical fiber cable 20 is set into an adhesive bead 22 that was previously deposited by an installer along an upper edge of a crown molding 24. In either case, once the adhesive bead 12, 22 dries and bonds the optical fiber cable 18, 20 in place, the cable blends into the edge of the baseboard molding 14 against the wall, or the edge of the crown molding 24 against the ceiling.

Accordingly, when using the procedure described above, the installation of a cable along a building hallway or inside of a living unit requires multiple steps, *viz.,* the cable is pulled off of a supply spool or reel, and, in a separate process, the cable is urged into a previously deposited adhesive bead along a molding or other supporting surface. Alternatively, instead of using an adhesive, the cable may be secured along a wall or ceiling using metal or plastics clips. In either case, such a two-step process is time consuming and may result in inconsistent degrees of support for the cable over the desired routing path.

### SUMMARY OF THE INVENTION

According to the invention, a system for installing an optical fiber cable in a building hallway or living unit is presented as defined by appended claim 1.

For a better understanding of the invention, reference is made to the following description taken in conjunction with the accompanying drawing and the appended claims.

### BRIEF DESCRIPTION OF THE DRAWING FIGURES

In the drawing:
FIGS. 1A to 1C show an application of an adhesive bead along a top edge of a baseboard molding;
FIGS. 1D to 1F show an optical fiber cable being set into the adhesive bead;
FIG. 2 shows an optical fiber cable set into an adhesive bead previously applied along an upper edge of a crown molding;
FIG. 3 shows a system for depositing an adhesive bead along a supporting surface while simultaneously setting an optical fiber or cable into the bead, according to the invention.
FIG. 4 is a schematic representation of the contents of a dispensing tube or cylinder in the system in FIG. 3, according to the invention;
FIG. 5 is a top view looking into the dispensing tube in FIG. 3;
FIG. 6 is an isometric side view of the dispensing tube in FIG. 3, including a dispensing tip or nozzle according to the invention;
FIG. 7 is an isometric view of a cap for the nozzle in FIG. 6, and
FIG. 8 is a view of the open end of the nozzle in FIG. 6.

### DETAILED DESCRIPTION OF THE INVENTION

FIG. 3 shows a system 50 for depositing an adhesive bead along a wall, ceiling, molding, or other supporting surface while simultaneously embedding an optical fiber or cable in the bead, according to the invention.

In the illustrated embodiment, an applicator 52 in the form of, for example, a conventional chalking tool or gun, is constructed and arranged to receive a dispenser cylinder 54 that contains both the adhesive and a continuous length of an optical fiber cable 56 embedded within the adhesive. A non-standard shape for the applicator 52 can be used with the same functionality; however, a customized tool would then be required.

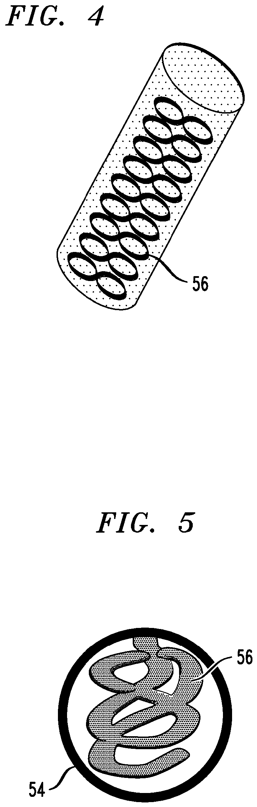

The cable 56 is wound in either a layered figure eight configuration as in FIG. 4, or a circular helical configuration, to avoid kinking or knotting up while the cable 56 is being dispensed. That is, both the cable 56 and the adhesive are loaded within the cylinder 54 in such a way that the cable and the adhesive are dispensed simultaneously. As the cable 56 is guided along a wall or molding, the adhesive surrounding the cable will bond the cable to the wall or molding without a need for a second application step once the adhesive cures.

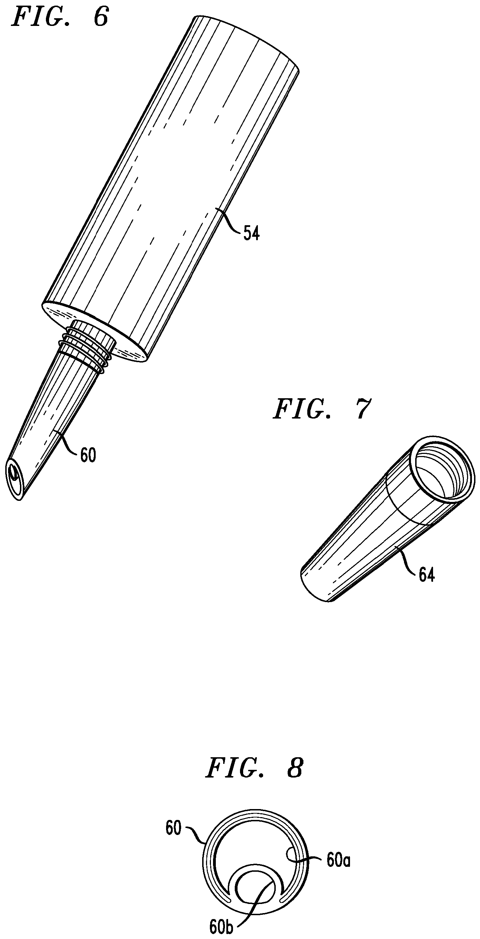

A nozzle 60 is fixed to a top end of the cylinder 54. As seen in FIG. 8, the nozzle 60 is split or divided into two separate passageways 60a, 60b to receive and manage dispensing of the adhesive and the cable 56 simultaneously. An angled cut can be formed at the end of the nozzle 60 to control the speed of adhesive dispensing and to keep the cable encapsulated within the adhesive. Moreover, a mark may be placed on the nozzle to inform the installer of the proper direction of applicator movement during installation that will ensure the cable is completely encapsulated by
the adhesive.

As mentioned, the cable 56 must be held inside the cylinder 54 in such a way that the cable can be dispensed (*i.e.,* pushed or pulled out) without knotting or breaking. This can be achieved by one of several ways:
1. By placing the cable freely in a figure eight pattern within the cylinder 54 which allows for dispensing continuously without forming kinks or knots in the cable;
2. Placing the cable in a circular coil or helical form; or
3. Placing the cable on a circular spool that fits within the cylinder 54 and which keeps the cable from knotting.

A threaded sealed cap 64, shown in FIG. 7, may be used to keep adhesive remaining inside the cylinder 54 from drying prior to and after installation. The cap 64 is cylindrical in shape to allow for a leading end section of cable 56 to be kept accessible. Thus, when the cap 64 is removed, the cable can be accessed easily to start application against a surface.

Examples of fiber cable outside diameter (O.D.) dimensions:
One (1) fiber cables: Bare fibers or coated fibers of 250, 500, 600, or 900 um O.D. buffered fiber.
Two to 24 fiber cables: 1.2 mm, 2 mm, and 3 mm O.D. jacketed cables. Rollable Ribbon Structures.

It will be appreciated that the present invention allows for the dispensing of an optical fiber cable and a securing adhesive in one continuous process. A faster and more consistent installation is therefore obtained when compared to the prior known processes.

The invention can be practiced in cases where the fiber cable 56 must pass through holes drilled in a wall or other structure during the installation process. In a typical installation, the cable must pass through at least one hole and often two or three holes. The holes may be located at any point of the fiber routing path.

Note that a tube or cylinder 54 having a 8 mm inner diameter (ID) and a 10 mm outer diameter (OD) could be pushed through holes along the installation path to enable the cable 56 to be threaded through the holes. For example, without limitation, an 8 mm ID / 10 mm OD tube 300 mm in length containing a 0.6 mm, 0.25 mm, or 0.20 mm OD fiber cable would hold approximately 12.4 meters, 30 meters, or 37.7 meters of the cable, respectively.

While the foregoing describes and illustrates preferred embodiments of the present invention, it will be understood by persons of ordinary skill in the art that various changes, modifications, and additions can be made without departing from the scope of the appended claims,

For example, the present invention is not limited only to cable installations inside of a building. Moreover, the adhesive material may contain UV protection, and have color as well as fire protection qualities.

Further, if the cable is an optical fiber or a buffered optical fiber having a textured outer surface, friction between the adhesive when wet and the outer surface of the fiber can be increased to facilitate co-extrusion of the fiber. The textured outer surface will also increase the volume of adhesive captured and retained by the fiber as it exits the nozzle opening. In addition, the fiber may be pre-terminated with an optical connector on one or both ends of the fiber, wherein the connector is situated outside of the nozzle 60 and the tube or cylinder 54.

Accordingly, the invention includes all such changes, modifications, and additions that are within the scope of the following claims.

## Claims

1. A system (50) for installing an optical fiber cable in a building hallway or living unit, comprising:
an elongated cylinder or tube (54);
**characterized in that**:
the cylinder or tube contains both an adhesive and a continuous length of an optical fiber or cable (56) embedded in the adhesive in a configuration that avoids formation of kinks or knots in the cable;
an elongated nozzle (60) configured to be fixed at a first end of the cylinder for depositing the adhesive and the cable from an open tip of the nozzle along a desired routing path in the building hallway or living unit; and
an applicator assembly constructed and arranged for receiving the cylinder (54) and for applying a dispensing force at a second end of the cylinder opposite the first end to urge the adhesive and the cable (56) out of the open tip of the nozzle (60).

2. A system according to claim 1, wherein the optical fiber cable (56) is embedded in the adhesive contained in the cylinder (54) in a circular helical form.

3. A system according to claim 1, wherein the optical fiber cable (56) is embedded in the adhesive contained in the cylinder in a continuous layered figure eight form.

4. A system according to claim 1, wherein the nozzle (60) has a first passageway (60a) for receiving the adhesive contained in the cylinder, and a second passageway (60b) for receiving the optical fiber cable (56) separately from the adhesive in which the cable is embedded inside the cylinder (54).

5. A system according to claim 4, wherein the tip of the nozzle (60) is configured for depositing the adhesive in the first passageway (60a) and the optical fiber cable (56) in the second passageway (60b) so that the cable is set within the deposited adhesive along the desired routing path in response to operation of the applicator.

6. A system according to claim 1, wherein the applicator is in the form of a chalking tool or gun.

7. A system according to claim 1, wherein the elongated cylinder or tube has an outer diameter of less than 25.4 mm (1 inch).

8. A system according to claim 1, wherein the cable (56) is an optical fiber or a buffered optical fiber having a textured outer surface so that friction between the adhesive when wet and the outer surface of the fiber is increased to facilitate co-extrusion of the fiber.

9. A system according to claim 1, wherein the cable (56) is an optical fiber or a buffered optical fiber having a textured outer surface for increasing the volume of adhesive captured and retained by the fiber as it exits the nozzle opening.

10. A system according to claim 1, wherein the cable (56) is an optical fiber or a buffered optical fiber, and including an optical fiber connector pre-terminated on one or both ends of the fiber, wherein the connector is situated outside of the nozzle, the tube, or the cylinder.

## Patentansprüche

1. Ein System (50) zum Installieren eines optischen Faserkabels in einem Gebäudeflur oder einer Wohneinheit, das folgende Merkmale aufweist:
einen länglichen Zylinder oder ein längliches Rohr (54);
**dadurch gekennzeichnet, dass**:
der Zylinder oder das Rohr sowohl ein Haftmittel als auch eine kontinuierliche Länge einer optischen Faser oder eines optischen Kabels (56) eingebettet in dem Haftmittel in einer Konfiguration enthält, die eine Bildung von Knicken oder Knoten in dem Kabel vermeidet;
eine längliche Düse (60), die dazu konfiguriert ist, an einem ersten Ende des Zylinders fixiert zu werden, um das Haftmittel und das Kabel von einer offenen Spitze der Düse entlang eines gewünschten Leitwegs in dem Gebäudeflur oder der Wohneinheit aufzubringen; und
eine Applikatoranordnung, die dazu aufgebaut und angeordnet ist, den Zylinder (54) aufzunehmen und eine Abgabekraft an einem zweiten Ende des Zylinders gegenüber dem ersten Ende anzulegen, um das Haftmittel und das Kabel (56) aus der offenen Spitze der Düse (60) zu drücken.

2. Ein System gemäß Anspruch 1, bei dem das optische Faserkabel (56) in dem in dem Zylinder (54) enthaltenen Haftmittel in einer kreisförmigen Spiralform eingebettet ist.

3. Ein System gemäß Anspruch 1, bei dem das optische Faserkabel (56) in dem in dem Zylinder enthaltenen Haftmittel in einer kontinuierlichen geschichteten Achterform eingebettet ist.

4. Ein System gemäß Anspruch 1, bei dem die Düse (60) einen ersten Durchgang (60a) zum Aufnehmen des in dem Zylinder enthaltenen Haftmittels und einen zweiten Durchgang (60b) zum Aufnehmen des optischen Faserkabels (56) getrennt von dem Haftmittel aufweist, in dem das Kabel innerhalb des Zylinders (54) eingebettet ist.

5. Ein System gemäß Anspruch 4, bei dem die Spitze der Düse (60) dazu konfiguriert ist, das Haftmittel in dem ersten Durchgang (60a) und das optische Faserkabel (56) in dem zweiten Durchgang (60b) aufzubringen, so dass das Kabel ansprechend auf den Betrieb des Applikators innerhalb des aufgebrachten Haftmittels entlang des gewünschten Leitwegs gelegt wird.

6. Ein System gemäß Anspruch 1, bei dem der Applikator in der Form eines Kreidewerkzeugs oder einer Kreidepistole ist.

7. Ein System gemäß Anspruch 1, bei dem der längliche Zylinder oder das längliche Rohr einen Außendurchmesser von weniger als 25,4 mm (1 Zoll) hat.

8. Ein System gemäß Anspruch 1, bei dem das Kabel (56) eine optische Faser oder eine gepufferte optische Faser mit einer strukturierten Außenoberfläche ist, so dass eine Reibung zwischen dem Haftmittel, wenn es nass ist, und der Außenoberfläche der Faser erhöht ist, um die Coextrusion der Faser zu ermöglichen.

9. Ein System gemäß Anspruch 1, bei dem das Kabel (56) eine optische Faser oder eine gepufferte optische Faser mit einer strukturierten Außenoberfläche ist, zum Erhöhen des Volumens des Haftmittels, das von der Faser eingefangen und zurückgehalten wird, wenn dasselbe aus der Düsenöffnung austritt.

10. Ein System gemäß Anspruch 1, bei dem das Kabel (56) eine optische Faser oder eine gepufferte optische Faser ist und einen optischen Faserverbinder aufweist, der an einem oder beiden Enden der Faser vorkonfiguriert ist, wobei der Verbinder außerhalb der Düse, des Rohrs oder des Zylinders angeordnet ist.

## Revendications

1. Système (50) d'installation d'un câble à fibre optique dans un couloir de bâtiment ou dans une unité d'habitation, comprenant:
un cylindre ou tube allongé (54);
**caractérisé par le fait que**:
le cylindre ou tube contient tant un adhésif qu'une longueur continue d'une fibre optique ou d'un câble (56) incorporé dans l'adhésif selon une configuration qui évite la formation de plis ou de noeuds dans le câble;
une buse allongée (60) configurée pour être fixée à une première extrémité du cylindre pour déposer l'adhésif et le câble à partir d'une pointe ouverte de la buse le long d'un trajet de routage souhaité dans le couloir de bâtiment ou l'unité d'habitation; et
un ensemble d'applicateur construit et disposé de manière à recevoir le cylindre (54) et à appliquer une force de distribution à une deuxième extrémité du cylindre opposée à la première extrémité pour pousser l'adhésif et le câble (56) hors de la pointe ouverte de la buse (60).

2. Système selon la revendication 1, dans lequel le câble à fibre optique (56) est incorporé dans l'adhésif contenu dans le cylindre (54) selon une forme hélicoïdale circulaire.

3. Système selon la revendication 1, dans lequel le câble à fibre optique (56) est incorporé dans l'adhésif contenu dans le cylindre selon une forme en huit en couches continues.

4. Système selon la revendication 1, dans lequel la buse (60) présente un premier passage (60a) destiné à recevoir l'adhésif contenu dans le cylindre, et un deuxième passage (60b) destiné à recevoir le câble à fibre optique (56) de manière séparée de l'adhésif dans lequel le câble est incorporé à l'intérieur du cylindre (54).

5. Système selon la revendication 4, dans lequel la pointe de la buse (60) est configurée pour déposer l'adhésif dans le premier passage (60a) et le câble à fibre optique (56) dans le deuxième passage (60b) de sorte que le câble soit placé dans l'adhésif déposé le long du trajet de routage souhaité en réponse à une opération de l'applicateur.

6. Système selon la revendication 1, dans lequel l'applicateur se présente sous forme d'un outil ou pistolet de traçage.

7. Système selon la revendication 1, dans lequel le cylindre ou tube allongé présente un diamètre extérieur de moins de 25,4 mm (1 pouce).

8. Système selon la revendication 1, dans lequel le câble (56) est une fibre optique ou une fibre optique tamponnée présentant une surface extérieure texturée de sorte que le frottement entre l'adhésif lorsqu'il est humide et la surface extérieure de la fibre soit augmenté pour faciliter la co-extrusion de la fibre.

9. Système selon la revendication 1, dans lequel le câble (56) est une fibre optique ou une fibre optique tamponnée présentant une surface extérieure texturée pour augmenter le volume d'adhésif capturé et retenu par la fibre au fur et à mesure qu'elle sort de l'ouverture de buse.

10. Système selon la revendication 1, dans lequel le câble (56) est une fibre optique ou une fibre optique tamponnée, et comportant un connecteur de fibre optique pré-terminé à une ou aux deux extrémités de la fibre, dans lequel le connecteur est situé à l'extérieur de la buse, du tube ou du cylindre.
